# EUROPÄISCHE PATENTANMELDUNG

(11) **EP 4 216 409 A1**
(43) Veröffentlichungstag der Anmeldung: **26.07.2023**
(21) Anmeldenummer: 22215713.3
(22) Anmeldetag: 17.04.2019
(51) Int. Cl.: H02K 15/02, B32B 37/12, B32B 38/04

(54) **VERFAHREN ZUR HERSTELLUNG VON LAMELLENPAKETEN SOWIE AUFTRAGEINRICHTUNG FÜR EIN KLEBEMITTEL ZUR DURCHFÜHRUNG DES VERFAHRENS**

(30) Priorität: 23.04.2018 DE 102018003345
(62) Teilanmeldung aus: 19000189.1
(71) Anmelder: Kienle + Spiess GmbH, 74343 Sachsenheim (DE)
(72) Erfinder: Böker, Björn, 73728 Esslingen (DE)
(74) Vertreter: Kohl, Karl-Heinz

(57) **Zusammenfassung**

Zur Herstellung von Lamellenpaketen für Rotoren und/oder Statoren von Elektromotoren oder Generatoren werden Lamellen gestanzt, auf deren wenigstens eine Seite ein Klebemittel aufgebracht wird. Die Lamellen werden anschließend zum Lamellenpaket gestapelt. Als Klebemittel wird ein lichtaktivierbares Klebemittel eingesetzt, das unmittelbar vor dem Austritt aus einer Auftrageinheit (8) mit Licht erforderlicher Wellenlänge bestrahlt und aktiviert wird. Das Klebemittel wird mit einer Auftrageinrichtung aufgebracht, die mit wenigstens einer Auftrageinheit (8) versehen ist. Sie hat wenigstens ein Ventil (9) zum Austrag des Klebemittels. Im Bereich des Ventiles (9) ist wenigstens eine Strahlungsquelle (15) vorgesehen, deren Strahlung auf das Klebemittel im Bereich des Ventils (9) gerichtet ist.

## Beschreibung

Die Erfindung betrifft ein Verfahren zur Herstellung von Lamellenpaketen nach dem Oberbegriff des Anspruches 1 sowie eine Auftrageinrichtung für ein Klebemittel zur Durchführung des Verfahrens nach dem Oberbegriff des Anspruches 12.

Lamellenpakete werden aus aufeinandergesetzten, aus Elektroblechen oder Elektrobändern gestanzten Lamellen hergestellt und für Rotoren und/oder Statoren von Elektromotoren oder Generatoren eingesetzt. Innerhalb des Lamellenpaketes werden die aufeinanderliegenden Lamellen mittels eines Klebemittels miteinander verbunden. Damit ein lichtaktivierbarer Klebstoff eine ausreichende Klebefestigkeit erhält, ist nach dem Auftrag des Klebemittels eine Aktivierungsstrecke innerhalb der Stanzeinrichtung erforderlich, damit das Klebemittel beim Stapelvorgang seine Klebwirkung ausüben kann. Die Länge dieser Aktivierungsstrecke hängt von der Hubzahl der Stanzwerkzeuge in der Stanzeinrichtung ab. Je höher diese Hubzahl ist, desto länger ist die Aktivierungsstrecke.

Der Erfindung liegt die Aufgabe zugrunde, das gattungsgemäße Verfahren und die gattungsgemäße Auftrageinrichtung so auszubilden, dass lange Aktivierungsstrecken innerhalb des Stanzprozesses oder eine nachfolgende Aktivierung beim Magnetefügen für das Klebemittel nicht erforderlich sind.

Diese Aufgabe wird beim gattungsgemäßen Verfahren erfindungsgemäß mit den kennzeichnenden Merkmalen des Anspruches 1 und bei der gattungsgemäßen Auftrageinrichtung erfindungsgemäß mit den kennzeichnenden Merkmalen des Anspruches 12 gelöst.

Beim erfindungsgemäßen Verfahren wird ein Klebemittel eingesetzt, das mittels Licht aktiviert werden kann. Die Lichtaktivierung kann hierbei unmittelbar vor dem Austritt des Klebemittels aus einer Auftrageinheit erfolgen. Das Licht kann hierbei mit einer solchen Wellenlänge und/oder Intensität eingesetzt werden, dass das Klebemittel unmittelbar nach dem Austritt aus der Auftrageinheit aktiviert ist. Aufgrund dieser Verfahrensführung ist eine Aktivierungsstrecke nicht mehr erforderlich, so dass eine Anlage zur Durchführung des Verfahrens eine entsprechend geringe Baugröße bzw. Baulänge hat.

Das Fügen von Magneten in Rotoren erfolgt vorzugsweise durch Kleben der Magnete an das Rotorpaket. Hierzu werden vorzugsweise lichtaktivierbare Klebstoffe verwendet. Sie werden nach dem Auftrag mittels einer UV-Lampe aktiviert.

Vorteilhaft wird das Klebemittel in einer Zuleitung zu einem Ventil der Auftragseinheit bestrahlt. Die Lichtaktivierung des Klebemittels erfolgt somit innerhalb der Klebemittelzuleitung, so dass eine einfache Aktivierung des Klebemittels möglich ist.

Es ist auch möglich, die Aktivierung des Klebemittels in einem Ventilstößel des Ventils der Auftrageinheit vorzunehmen. In diesem Falle wird das Klebemittel, das sich im Ventilstößel kurz vor dem Austritt aus dem Ventil befindet, entsprechend aktiviert.

Als vorteilhaftes Klebemittel wird ein UV-Kleber verwendet, der mit UV-Licht bestrahlt wird.

Es können auch Klebemittel eingesetzt werden, die beispielsweise durch Elektronenbestrahlung aktivierbar sind. Auch andere Klebemittel, die mittels Lichts und/oder Temperatur aktivierbar sind, kommen in Betracht.

Bei einer vorteilhaften Verfahrensführung wird das Klebemittel in Form von Tropfen oder Linien auf eine mit Plasma vorbehandelte Oberfläche aufgebracht. Die Tropfen oder Linien werden dort aufgebracht, wo sie für die Klebeverbindung benachbarter Lamellen innerhalb des Lamellenpakets notwendig sind. Dadurch kann der Klebemittelverbrauch sehr gering gehalten werden.

Durch die Plasmavorbehandlung wird das für die Lamellen eingesetzte Band gereinigt und die Oberflächenenergie des Bandes erhöht. Dadurch wird eine bessere und reproduzierbare Klebstoffbenetzung erzielt.

Das Klebemittel wird vorteilhaft berührungslos aufgebracht, so dass eine Verschmutzung des Ventils der Auftrageinheit gering gehalten werden kann.

Das Klebemittel kann bei einer besonderen Verfahrensweise vor dem Stanzvorgang aufgebracht werden. Die Lamellen zur Bildung des Lamellenpaketes werden erst anschließend gestanzt.

Es ist aber auch möglich, das Klebemittel erst nach dem Stanzvorgang, aber noch vor dem Stapeln zum Lamellenpaket aufzubringen. Bei dieser Verfahrensweise muss bei der Gestaltung der Stanzwerkzeuge nicht auf die Lage des Klebemittels Rücksicht genommen werden.

Bei einer bevorzugten Ausbildung erfolgt die Bestrahlungsdauer des Klebemittels in Abhängigkeit von der Hubzahl eines Stanzwerkzeuges. Je höher die Hubzahl dieses Stanzwerkzeuges ist, umso länger muss das Klebemittel lichtaktiviert werden.

Die erfindungsgemäße Auftrageinheit zeichnet sich dadurch aus, dass im Bereich des Ventiles wenigstens eine Strahlungsquelle vorgesehen ist, deren Strahlung auf das Klebemittel im Bereich des Ventils gerichtet ist. Dadurch kann das Klebemittel unmittelbar vor dem Austritt aus der Auftrageinheit mit dem erforderlichen Licht bestrahlt und damit aktiviert werden. Bei einer vorteilhaften Ausführungsform ist die Zuleitung für das Klebemittel im Bereich der von der Strahlungsquelle ausgesandten Strahlung so ausgebildet, dass die Zuleitung für die Strahlung durchlässig ist. Der übrige Bereich der Zuleitung ist für die Strahlung undurchlässig, so dass die Aktivierung erst dann erfolgt, wenn sich das Klebemittel in dem strahlungsdurchlässigen Bereich der Zuleitung befindet.

Der strahlungsdurchlässige Bereich der Zuleitung erstreckt sich vorteilhaft bis zum Ventil. Dadurch wird das Klebemittel so lange mit Licht beaufschlagt, bis es in das Ventil gelangt und ausgetragen wird.

Eine einfache Änderung der Belichtungsdauer ist dadurch möglich, dass der strahlungsdurchlässige Bereich durch wenigstens eine Blende abgedeckt werden kann, die für die Strahlung undurchlässig ist. Mit der Blende ist es möglich, die Länge des strahlungsdurchlässigen Zuleitungsbereiches zu verändern, wodurch auch die Belichtungsdauer verstellt wird.

Vorteilhaft ist es, wenn die Blende stufenlos verstellbar ist. Dadurch kann die Belichtungsdauer sehr feinfühlig durch Verstellen der strahlungsundurchlässigen Blende eingestellt werden.

Bei einer bevorzugten Ausführungsform ist die Blende ringförmig ausgebildet, so dass sie die Zuleitung für das Klebemittel umgibt.

Damit das Klebemittel einfach an der vorgesehenen Stelle der Lamelle vorgesehen werden kann, ist das Ventil vorteilhaft auf einem Träger vorgesehen, der quer zur Vorschubrichtung eines Elektrobandes oder eines Elektrobleches verstellt werden kann.

Eine vorteilhafte Ausführungsform zeichnet sich dadurch aus, dass die Auftrageinrichtung ein Gestell aufweist, in dem wenigstens zwei Auftrageinheiten untergebracht sind. Die eine Auftrageinheit befindet sich im Bereich oberhalb und die andere Auftrageinheit im Bereich unterhalb des Elektrobandes oder Elektrobleches, das durch das Gestell transportiert wird. Dadurch kann auf beide Seiten des Elektrobandes bzw. des Elektrobleches das Klebemittel aufgebracht werden.

Eine weitere vereinfachte Variante ist der Klebstoffauftrag von einer Seite. Hierbei wird der Klebstoff vorzugsweise auf die Oberseite aufgebracht.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und der Zeichnung.

Die Erfindung wird anhand zweier in den Zeichnungen dargestellter Ausführungsformen näher erläutert. Es zeigen
- Fig. 1: in schematischer Darstellung eine Aktivierungs- und Auftrageinheit einer erfindungsgemäßen Auftrageinrichtung,
- Fig. 2: in schematischer Darstellung eine weitere Ausführungsform einer Auftrageinheit einer erfindungsgemäßen Auftrageinrichtung, die einer Auslochstanzeinrichtung vorgeschaltet ist,
- Fig. 3: in schematischer Darstellung eine weitere Ausführungsform einer Auftrageinheit einer erfindungsgemäßen Auftrageinrichtung, die einer Auslochstanzeinrichtung vorgeschaltet ist,
- Fig. 4: in schematischer Darstellung eine Stanzeinrichtung,
- Fig. 5: in schematischer Darstellung eine weitere Ausführungsform einer Aktivierungs- und Auftrageinheit,

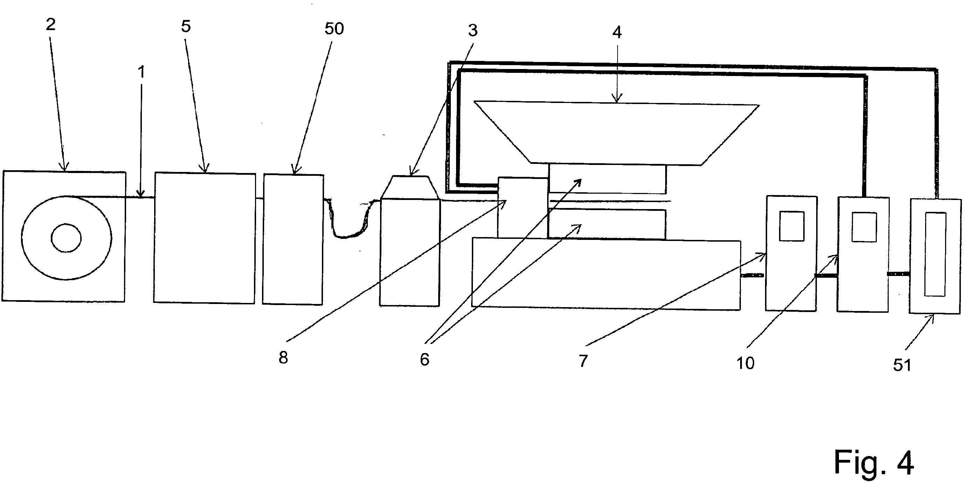

Aus einem Elektroband 1 werden in bekannter Weise Lamellen gestanzt, die zu Lamellenpaketen gestapelt werden, aus denen Rotoren und/oder Statoren für elektrische Antriebe oder Generatoren hergestellt werden. Das Elektroband 1 wird von einem Coil 2 abgewickelt (Fig. 4). Mittels eines Vorschubes 3 wird das Elektroband 1 einer Stanzeinrichtung 4 zugeführt, mit der aus dem Elektroband 1 die Lamellen gestanzt werden. Zwischen dem Vorschub 3 und dem Coil 2 kann ein Richtapparat 5 vorgesehen sein, um das Elektroband 1 zu richten.

Des Weiteren befindet sich im Abschnitt der Bandzuführung eine Plasmaanlage 50 (Fig. 4) zur Reinigung sowie Einstellung der Oberflächenenergie am Band. In einer günstigen Ausführungsform befinden sich die Plasmadüsen innerhalb des Stanzprozesses an einer Position, in welcher die Bandgeschwindigkeit konstant ist. Hierbei sind mindestens eine Düse oberhalb und eine unterhalb des Bandes mit einem definierten Abstand von bis circa 10 mm angeordnet. Mittels der Erhöhung der Oberflächenenergie wird die Benetzung des Klebstoffes optimiert. Dadurch wird die Anbindung des Klebstoffes zur Bandoberfläche verbessert. Damit ist der Klebstoff positionsstabiler während der Bewegung des Bandes in Vorschubrichtung im Stanzprozess. Bei einer günstigen Ausführungsform kann die Oberfläche mittels Abscheidens von Aktivatoren durch den Plasmaprozess nochmals aufgewertet werden.

Die Plasmaanlage 50 ist in Zuführrichtung des Elektrobandes 1 vor der Stanzeinrichtung 4 angeordnet. Hat die Auftrageinheit einen Richtapparat, dann befindet sich die Plasmaanlage 50 vorteilhaft zwischen dem Richt-apparat und der Stanzeinrichtung 4.

Die Auftrageinheit 8 ist mit einer schematisch dargestellten Medienversorgung 51 verbunden.

In der Stanzeinrichtung 4 findet sich das entsprechende Werkzeug 6, mit dem aus dem Elektroband 1 die Lamellen gestanzt werden. Die Stanzeinrichtung 4 ist an eine Steuerung 7 angeschlossen, mit welcher der Stanzhub gesteuert wird.

Die Lamellen werden in bekannter Weise in aufeinanderfolgenden Stanzschritten aus dem Elektroband 1 gestanzt. Je nach Breite und/oder Form der Lamellen können die Lamellen in einer oder mehreren Spuren aus dem Elektroband 1 gestanzt werden.

Anstelle eines Elektrobandes können zum Ausstanzen der Lamellen auch Elektrobleche oder Streifen eingesetzt werden.

Die ausgestanzten Lamellen werden vorteilhaft in einem (nicht dargestellten) Schacht innerhalb der Stanzeinrichtung 4 gestapelt. Im Schacht befindet sich eine Bremseinrichtung, mit der die Lamellen während der Stapelung festgehalten werden. Da eine solche Stapelung der Lamellen innerhalb der Stanzeinrichtung 4 bekannt ist, wird sie auch nicht näher beschrieben.

Es besteht weiter die Möglichkeit, die ausgestanzten Lamellen außerhalb der Stanzeinrichtung 4 zu stapeln. Auch diese Vorgehensweise ist an sich bekannt und wird daher auch nicht näher beschrieben.

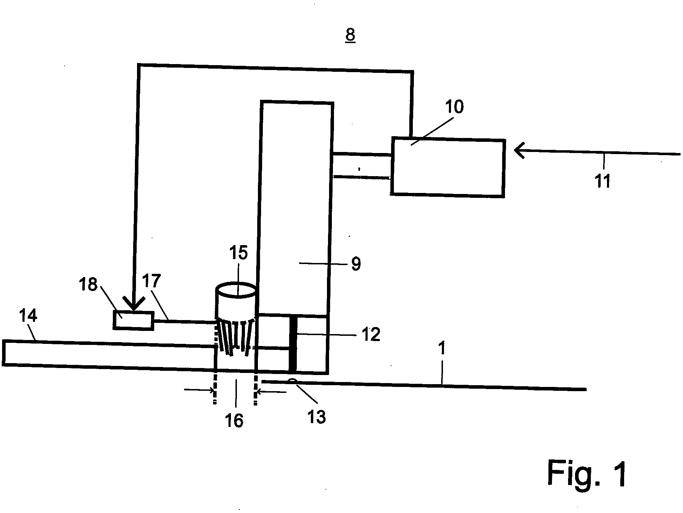

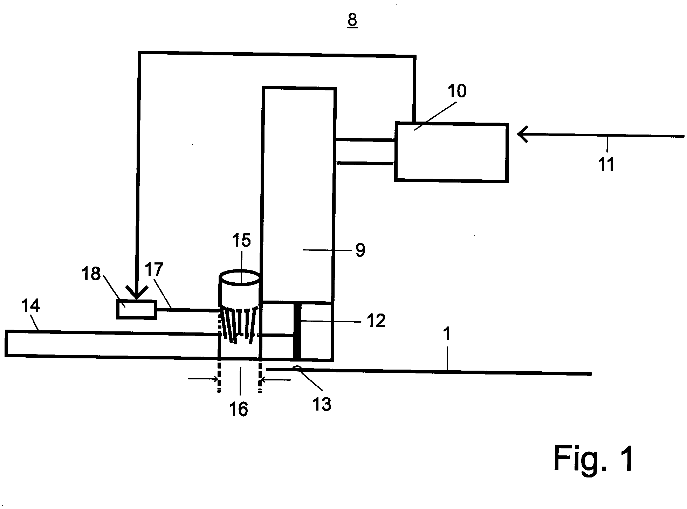

Um die im Stapel aufeinander liegenden Lamellen miteinander zu verbinden, wird ein Klebemittel eingesetzt, das in zu beschreibender Weise auf die Lamellen aufgebracht wird. Für den Klebemittelauftrag ist eine Auftrageinheit 8 vorgesehen, die in Fig. 1 schematisch dargestellt ist. Die Auftrageinheit 8 hat wenigstens ein Ventil 9, das vorteilhaft ein Jetventil ist. Das Ventil 9 ist an eine Steuerung 10 angeschlossen, die in Abhängigkeit von einem zugeführten Pressensignal 11 das Ventil 9 steuert.

Das Ventil 9 hat einen Ventilstößel 12, über den das Klebemittel auf das Elektroband 1 aufgebracht wird. Im dargestellten Ausführungsbeispiel wird das Klebemittel in Form eines Tropfens 13 auf das Elektroband 1 aufgebracht.

Das Klebemittel wird von einem (nicht dargestellten) Vorratsbehälter über eine Zuleitung 14 dem Ventilstößel 12 zugeführt, mit dem das Klebemittel auf das Elektroband 1 aufgebracht wird. Die Zuleitung 14 erstreckt sich bis zum Ventilstößel 12.

Als Klebemittel wird ein durch Strahlung mit geeigneter Wellenlänge aktivierbares Klebemittel eingesetzt. Ein solches Klebemittel ist beispielsweise ein UV-Klebemittel, das mit UV-Licht aktiviert werden kann. Die UV-Strahlung hat eine Wellenlänge im Bereich zwischen etwa 400 bis 550 nm.

Auch andere geeignete lichtaktivierbare Klebemittel können eingesetzt werden, die mit Licht einer entsprechenden Wellenlänge bestrahlt und damit aktiviert wird. Als Licht kommen beispielsweise auch Elektronenstrahlen in Betracht.

Die entsprechende Strahlungsquelle 15 (Fig. 1), die beispielsweise eine UV-Lichtquelle sein kann, ist so angeordnet, dass die von ihr ausgesandte Strahlung auf das in der Zuleitung 14 befindliche Klebemittel unmittelbar vor dem Ventil 9 gelangt und das Klebemittel aktiviert. Vorteilhaft ist die Strahlungsquelle 15 ringförmig ausgebildet, so dass sie die Zuleitung 14 ringförmig umgibt. Die Achse der ringförmigen Strahlungsquelle 15 bildet in diesem Falle die Achse der Zuleitung 14. Selbstverständlich kann die Licht- bzw. Strahlungsquelle 15 auch eine andere Gestaltung haben. Sie muss lediglich so ausgebildet sein, dass die von ihr ausgehende Strahlung das Klebemittel in der Zuleitung 14 ausreichend aktiviert.

Im Strahlungsbereich der Strahlungsquelle 15 ist die Zuleitung 14 für die Strahlung durchlässig. Wenn das Klebemittel auf das Elektroband 1 aufgebracht wird, ist es durch die Strahlungsquelle 15 ausreichend aktiviert, so dass das Klebemittel seine Klebefunktion beim Stapeln der gestanzten Lamellen zum Lamellenstapel erfüllen kann.

Die Belichtungszeit richtet sich nach der Größe der Hubzahl der Stanzeinrichtung 4. Je höher die Hubzahl ist, desto länger ist auch die Belichtungszeit des Klebemittels in der Zuleitung 14.

Um unterschiedliche Aktivierungszeiten zu erhalten, wird die Lichtquelle 15 mit einer maximalen Belichtungsstrecke 16 ausgelegt, bezogen auf die Längsrichtung der Zuleitung 14 (Fig. 1). Im Bereich dieser Belichtungsstrecke 16 ist die Zuleitung 14 für die von der Strahlungsquelle 15 ausgesandte Strahlung durchlässig.

Die in Achsrichtung der Zuleitung 14 gemessene Länge der Belichtungsstrecke 16 bestimmt die maximale Hubzahl der Stanzeinrichtung 4 bzw. ihres Werkzeuges 6.

Werden kleinere Hubzahlen in der Stanzeinrichtung 4 verwendet, kann die Belichtungsstrecke 16 verkürzt werden, indem beispielsweise eine Blende 17 zwischen die Zuleitung 14 und die Strahlungsquelle 15 gebracht wird. Ist die Strahlungsquelle vorteilhaft ringförmig ausgebildet, wird eine entsprechende Ringblende verwendet. Sie ist für die von der Strahlungsquelle 15 ausgehende Strahlung undurchlässig, so dass die Strahlung nur in demjenigen Bereich auf das Klebemittel fällt, der nicht von der Blende abgedeckt ist.

Je geringer die Hubzahl des Werkzeuges 6 in der Stanzeinrichtung 4 ist, desto kleiner kann die Belichtungsstrecke 16 sein. Die Blende wird dementsprechend so weit vorgeschoben, dass nur noch ein geringer Teil der Strahlung auf das Klebemittel trifft.

Die Verstellung der Blende 17 erfolgt vorteilhaft motorisch. Der Antrieb 18 für die Blende 17 ist vorteilhaft an die Steuerung 10 angeschlossen. Da der Steuerung 10 die Pressensignale 11 zugeführt werden, kann sie in Abhängigkeit vom Pressensignal 11 den Antrieb 18 so betätigen, dass die Blende 17 die Länge der Belichtungsstrecke 16 entsprechend der Hubzahl einstellt.

Im dargestellten Ausführungsbeispiel befindet sich die Strahlungsquelle 15 unmittelbar benachbart zum Ventil 9. Dadurch baut die Auftrageinheit 8 kurz, so dass für die Auftrageinheit 8 auch nur ein kleiner Einbauraum erforderlich ist. Die Strahlungsquelle 15 kann aber auch mit Abstand zum Ventil 9 vorgesehen sein. In diesem Falle kann die Strahlungsquelle 15 derart ausgebildet sein, dass sie das Licht zur Aktivierung des Klebemittels bis in den Bereich des Ventiles 9 abstrahlt.

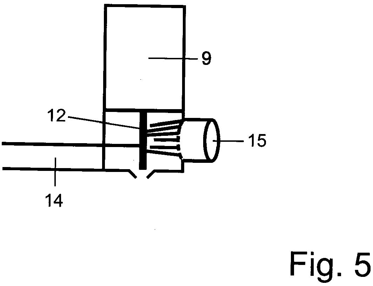

Die Strahlungsquelle 15 kann auch so angeordnet sein, dass das von ihr ausgesandte Licht auf den Ventilstößel 12 des Ventiles 9 fällt (Fig. 5). Dies hat zur Folge, dass das Klebemittel unmittelbar vor seinem Austrag aus dem Ventil 9 durch das Licht aktiviert wird. Die Zuleitung 14 für das Klebemittel benötigt in diesem Falle keinen lichtdurchlässigen Bereich. im Übrigen ist die Auftrageinheit gleich ausgebildet wie das Ausführungsbeispiel gemäß Fig. 1.

Bei den beschriebenen Ausführungsbeispielen hat das Ventil 9 nur einen einzigen Ventilstößel 2. Mit einem solchen Ventil 9 wird darum auch nur ein Klebemittetropfen 13 auf das Elektroband 1 aufgebracht.

Das Ventil 9 kann aber auch so ausgebildet sein, dass es zwei oder mehr Ventilstößel 12 aufweist. Diese Ventilstößel sind in Abhängigkeit von der Gestalt der zu stanzenden Lamellen angeordnet. Dann können die Klebemitteltropfen an denjenigen Stellen der Lamelle aufgebracht werden, die für den Zusammenhalt der Lamellen innerhalb des Lamellenpaketes optimal sind.

Die Auftrageinheit 8 kann vor der Stanzeinrichtung 4 angeordnet sein, so dass die Lamellen erst dann aus dem Elektroband 1 gestanzt werden, wenn das Klebemittel bereits auf das Elektroband an den erforderlichen Stellen aufgebracht worden ist.

Es besteht aber auch die Möglichkeit, die Auftrageinheit 8 nach dem Stanzwerkzeug anzuordnen, bevor die gestanzten Lamellen in den Stapelschacht gelangen. Der Ausstoßstempel, mit dem die Lamellen in diesen Schacht gedrückt werden, ist so ausgebildet, dass er mit den auf der Lamelle befindlichen Klebemitteltropfen 13 nicht in Berührung kommt.

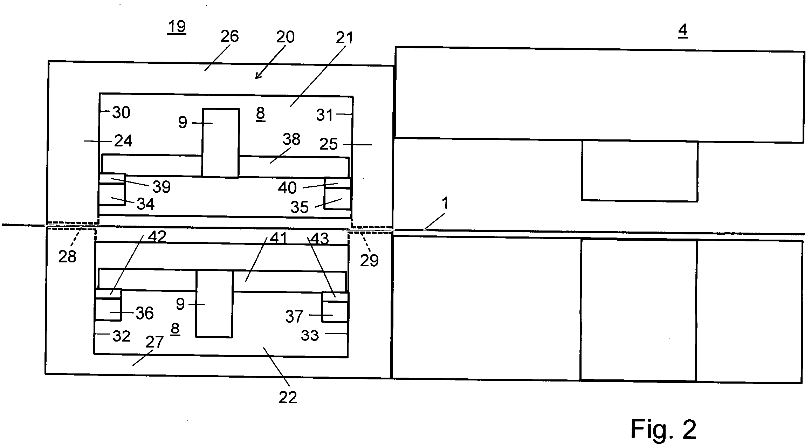

Fig. 2 zeigt eine der Stanzeinrichtung 4 vorgeschaltete Einrichtung 19, die zwei Auftrageinheiten 8 aufweist, die im Bereich oberhalb und unterhalb des Elektrobandes 1 angeordnet sind.

Die Einrichtung hat ein portalförmiges Gestell 20, in dem zwei übereinanderliegende Aufnahmeräume 21, 22 vorgesehen sind, in denen jeweils eine Auftrageinheit 8 untergebracht ist.

Das Gestell 20 hat zwei parallel zueinander liegende vertikale Ständer 24, 25, die am oberen Ende durch einen Querträger 26 miteinander verbunden sind. Die Ständer 24, 25 können am unteren Ende durch einen weiteren Querträger 27 miteinander verbunden sein.

Im Ständer 24 befindet sich eine schematisch dargestellte Einlassöffnung 28 und im Ständer 25 eine schematisch dargestellte Auslassöffnung 29 für den Durchtritt des Elektrobandes 1.

In den beiden Aufnahmeräumen 21, 22 sind an den einander gegenüberliegenden Innenseiten 30, 31; 32, 33 der Ständer 24, 25 horizontal sich erstreckende Schienen 34, 35; 36, 37 befestigt. Die Schienen 34 bis 37 erstrecken sich parallel zum Elektroband 1. Auf den Schienen 34, 35 ist eine Ventilplatte 38 gelagert, die längs der Schienen 34, 35 quer zur Vorschubrichtung des Elektrobandes 1 horizontal verfahren werden kann. Die Ventilplatte 38 trägt das Ventil 9 mit dem (nicht dargestellten) Ventilstößel. Vorteilhaft ist die Ventilplatte 38 unter Zwischenlage jeweils wenigstens eines Federelementes 39, 40 als Entkopplungselement auf den Schienen 34, 35 gelagert. Das Ventil 9 ist vorteilhaft in Höhenrichtung gegenüber der Ventilplatte 38 verstellbar, um den Abstand zwischen dem Ventil 9 und dem Elektroband 1 einstellen zu können.

Auf den Schienen 36, 37 im unteren Aufnahmeraum 22 ist ebenfalls eine Ventilplatte 41 gelagert. Auch die Ventilplatte 41 liegt vorteilhaft unter Zwischenlage jeweils wenigstens eines Federelementes 42, 43 als Entkopplungselement auf den Schienen 36, 37 auf. Die Ventilplatte 41 trägt das Ventil 9, das in Höhenrichtung verstellbar in der Ventilplatte 41 gelagert ist.

Die beiden Ventilplatten 38, 41 mit dem Ventil 9 sind spiegelbildlich zueinander angeordnet.

Mit den beiden Auftrageinheiten 8 kann auf die Ober- und die Unterseite des Elektrobandes 1 das Klebemittel aufgetragen werden. Durch Verfahren der Ventilplatte 38, 41 kann die Position der Klebetropfen 13 auf dem Elektroband 1 bestimmt werden.

Vorteilhaft sind beide Auftrageinheiten 8 gleich ausgebildet. Grundsätzlich können die Auftrageinheiten 8 auch eine unterschiedliche Ausgestaltung haben.

Die beiden Auftrageinheiten 8 haben, wie anhand der Fig. 1 und 5 beispielhaft erläutert worden ist, jeweils wenigstens eine Strahlungsquelle 15, um das Klebemittel mit Licht der erforderlichen Wellenlänge zu aktivieren, bevor es auf das Elektroband 1 aufgebracht wird.

Das mit den Klebemitteltropfen 13 versehene Elektroband 1 gelangt anschließend in die Stanzeinrichtung 4, mit den Lamellen aus dem Elektroband 1 in bekannter Weise gestanzt werden.

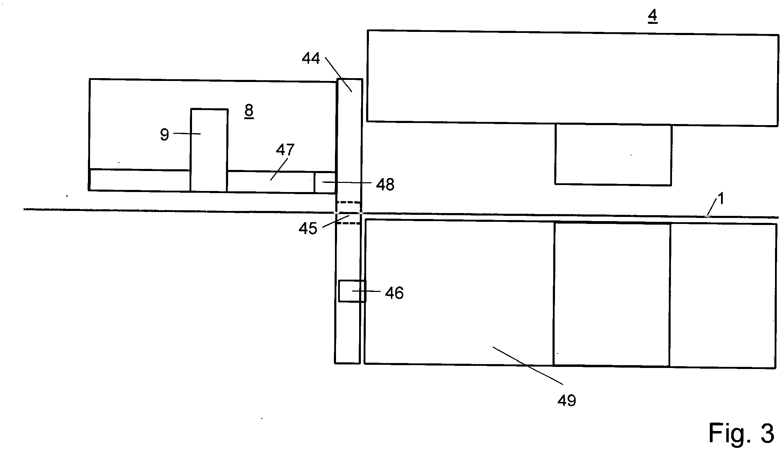

Bei der Ausführungsform gemäß Fig. 3 ist das Gestell 44 ein vertikaler Ständer. In ihm befindet sich eine schematisch dargestellte Einlassöffnung 45 für den Durchtritt des Elektrobandes 1. Am Ständer 44 ist eine Ventilplatte 47 gelagert, die längs Schienen 46 quer zur Vorschubrichtung des Elektrobandes 1 horizontal verfahren werden kann. Die Schienen 46 sind an einem Werkzeugunterteil 49 der Stanzeinrichtung 4 befestigt und erstrecken sich parallel zum Elektroband 1. Die Ventilplatte 47 trägt das Ventil 9 mit dem (nicht dargestellten) Ventilstößel. Vorteilhaft ist die Ventilplatte 47 unter Zwischenlage wenigstens eines Federelementes 48 als Entkopplungselement an dem Ständer 44 gelagert. Das Ventil 9 ist vorteilhaft in Höhenrichtung gegenüber der Ventilplatte 47 verstellbar, um den Abstand zwischen dem Ventil 9 und dem Elektroband 1 einstellen zu können.

Mit mindestens einer Auftrageinheit 8 kann auf die Oberseite des Elektrobandes 1 das Klebemittel aufgetragen werden. Durch Verfahren der Ventilplatte 47 kann die Position der Klebetropfen 13 auf dem Elektroband 1 bestimmt werden. Im Unterschied zur Ausführungsform nach Fig. 2 ist nur im Bereich oberhalb des Elektrobandes 1 die Auftrageinheit 8 vorgesehen. Sie hat die wenigstens eine Strahlungsquelle 15 (Fig. 1 und 5), um das Klebemittel in der beschriebenen Weise zu aktivieren

## Patentansprüche

1. Verfahren zur Herstellung von Lamellenpaketen für Rotoren und/oder Statoren von Elektromotoren oder Generatoren, bei dem Lamellen gestanzt, auf wenigstens eine Seite der Lamelle ein Klebemittel aufgebracht und die Lamellen zum Lamellenpaket gestapelt werden,
**dadurch gekennzeichnet, dass** als Klebemittel ein lichtaktivierbares Klebemittel eingesetzt wird, das unmittelbar vor dem Austritt aus einer Auftrageinheit (8) mit Licht erforderlicher Wellenlänge bestrahlt und aktiviert wird.

2. Verfahren nach Anspruch 1,
**dadurch gekennzeichnet, dass** zur Fixierung von Magneten am Rotor eine Klebstoffaktivierung durchgeführt wird.

3. Verfahren nach Anspruch 1 oder 2,
**dadurch gekennzeichnet, dass** das Klebemittel in einer Zuleitung (14) zu einem Ventil (9) der Auftrageinheit (8) bestrahlt wird.

4. Verfahren nach Anspruch 1 oder 2,
**dadurch gekennzeichnet, dass** das Klebemittel in einem Ventilstößel (12) eines Ventils (9) der Auftrageinheit (8) bestrahlt wird.

5. Verfahren nach einem der Ansprüche 1 bis 4,
**dadurch gekennzeichnet, dass** das vorteilhaft als UV-Kleber ausgebildete Klebemittel in Form von Tropfen (13) aufgebracht wird.

6. Verfahren nach einem der Ansprüche 1 bis 5,
**dadurch gekennzeichnet, dass** das Klebemittel berührungslos aufgebracht wird.

7. Verfahren nach einem der Ansprüche 1 bis 6,
**dadurch gekennzeichnet, dass** das Klebemittel vor oder nach dem Stanzvorgang aufgebracht wird.

8. Verfahren nach einem der Ansprüche 1 bis 7,
**dadurch gekennzeichnet, dass** die Bestrahlungsdauer in Abhängigkeit von der Hubzahl eines Stanzwerkzeuges (6) erfolgt.

9. Verfahren nach einem der Ansprüche 1 bis 8,
**dadurch gekennzeichnet, dass** mittels einer Plasmabehandlung die Oberflächenenergie eingestellt und die Oberfläche der Lamelle aktiviert wird.

10. Verfahren nach einem der Ansprüche 1 bis 9,
**dadurch gekennzeichnet, dass** das Klebemittel vor oder nach dem Fügen von Magneten eingebracht wird.

11. Verfahren nach einem der Ansprüche 1 bis 10,
**dadurch gekennzeichnet, dass** die Bestrahlungsdauer in Abhängigkeit von der Fügezeit bzw. Klebstoffoffenzeit der Magnete erfolgt.

12. Auftrageinrichtung für ein Klebemittel zur Durchführung des Verfahrens nach einem der Ansprüche 1 bis 11, mit wenigstens einer Auftrageinheit, die mindestens ein Ventil zum Austrag des Klebemittels aufweist, **dadurch gekennzeichnet, dass** im Bereich des Ventils (9) wenigstens eine Strahlungsquelle (15) vorgesehen ist, deren Strahlung auf das Klebemittel im Bereich des Ventils (9) gerichtet ist.

13. Auftrageinrichtung nach Anspruch 12,
**dadurch gekennzeichnet, dass** eine Zuleitung (14) für das Klebemittel im Bereich der von der Strahlungsquelle (15) ausgesandten Strahlung für diese Strahlung durchlässig ist, und dass sich vorteilhaft der strahlungsdurchlässige Bereich der Zuleitung (14) bis zum Ventil (9) erstreckt.

14. Auftrageinrichtung nach Anspruch 12 oder 13,
**dadurch gekennzeichnet, dass** der strahlungsdurchlässige Bereich durch wenigstens eine vorteilhaft stufenlos verstellbare Blende (17), die für die Strahlung undurchlässig ist, zumindest teilweise abdeckbar ist, und dass vorzugsweise die Blende (17) die Zuleitung (14) umgibt.

15. Auftrageinrichtung nach einem der Ansprüche 12 bis 14,
**dadurch gekennzeichnet, dass** das Ventil (9) auf einem Träger (38, 41, 47) vorgesehen ist, der quer zur Vorschubrichtung eines Elektrobandes (1) oder Elektrobleches verstellbar ist.

16. Auftrageinrichtung nach einem der Ansprüche 12 bis 15,
**dadurch gekennzeichnet, dass** der Klebstoff im Ventil (9) durch ein Heizelement im Applikationsbereich erwärmt wird.

17. Auftrageinrichtung nach einem der Ansprüche 12 bis 16,
**dadurch gekennzeichnet, dass** in einem Gestell (20) wenigstens zwei Auftrageinheiten (8) untergebracht sind, von denen die eine Auftrageinheit (8) im Bereich oberhalb und die andere Auftrageinheit (8) im Bereich unterhalb des Elektrobandes (1) oder Elektrobleches angeordnet ist, das durch das Gestell (20) transportierbar ist.
